# EUROPEAN PATENT APPLICATION

(11) **EP 2 410 733 A2**
(43) Date of publication of application: **25.01.2012**
(21) Application number: 11172857.2
(22) Date of filing: 06.07.2011
(51) Int. Cl.: H04N 5/232, G06T 5/00

(54) **Camera system and method of displaying photos**

(30) Priority: 22.07.2010 US 841388
(71) Applicant: Sony Ericsson Mobile Communications AB, 221 88 Lund (SE)
(72) Inventor: Thörn, Carl Ola, SE-216 12 Limhamn (SE)
(74) Representative: VALEA AB

(57) **Abstract**

Photos captured using a light-field camera may be displayed on a display. The focus of the photo is adjusted to place an object at which the user is looking into focus. Objects at other depths in the scene captured in the photo may be displayed to be out of focus, such as in a manner similar to which humans visually perceive the world around them.

## Description

### TECHNICAL FIELD OF THE INVENTION

The technology of the present disclosure relates generally to photography and, more particularly, to digital camera systems and methods for displaying photographs in a manner that simulates how people see.

### BACKGROUND

Conventional photos are taken with a static focal length and resulting photos are displayed as still images in accordance with the focus used at the time of capturing the photo. But this is not how people visually perceive their surroundings since eyes focus on an object at which the person's gaze is directed. Objects at other distances and in the user's peripheral vision tend to appear with less distinction and are often out of focus. Therefore, conventional photos and photo display techniques do not fully capture the beauty and richness of a scene as the scene would be perceived by a person that observes the scene directly with his or her eyes.

### SUMMARY

To enhance the display of digital photos, the photos may be initially captured using a light-field camera (also known as a plenoptic camera). When a photo taken with the light-field camera is displayed, the focus of the existing photo is adjusted to place an object at which the user is looking into focus. Objects at other depths in the scene captured in the photo are displayed out of focus, similar to the manner that humans visually perceive the world around them. Eye gaze tracking may be used to determine the portion of the photo at which the user is looking.

According to one aspect of the disclosure, a method of displaying a digital photo includes displaying image data from an image file on a display, the image data captured with a light-field camera assembly and representing a scene having a plurality of objects at different focus depths; detecting eye gaze of a user and indentifying one of the objects at which the user is looking; and focusing the displayed image data by bringing the displayed image data for the identified object into focus.

According to one embodiment of the method, the method further includes detecting a change in the eye gaze of the user to a different object and refocusing the displayed image data to bring the different object into focus.

According to one embodiment of the method, the focusing includes displaying objects having focus depths that are different than the focus depth of the identified object to be out of focus.

According to one embodiment of the method, the focusing includes bringing additional objects at the focus depth of the identified object into focus.

According to one embodiment of the method, the focusing includes displaying portions of the displayed image data radially surrounding the identified object to be out of focus to simulate human vision where objects surrounding an object at which visual attention is directed appears with less distinction than the object at which the visual attention is directed.

According to another aspect of the disclosure, an electronic device that displays a digital photo includes a display configured to display image data from an image file, the image data captured with a light-field camera assembly and representing a scene having a plurality of objects at different focus depths; a camera arranged to capture images of a user while the user views the displayed image data; and a control circuit configured to detect eye gaze of a user and indentify one of the objects at which the user is looking; and control the display of the image data to focus the displayed image data to bring the displayed image data for the identified object into focus.

According to one embodiment of the electronic device, the control circuit is further configured to detect a change in the eye gaze of the user to a different object and refocus the displayed image data to bring the different object into focus.

According to one embodiment of the electronic device, the display of the image data is controlled to display objects having focus depths that are different than the focus depth of the identified object to be out of focus.

According to one embodiment of the electronic device, the display of the image data is controlled to display additional objects at the focus depth of the identified object to be in focus.

According to one embodiment of the electronic device, the display of the image data is controlled to display portions of the displayed image data radially surrounding the identified object to be out of focus to simulate human vision where objects surrounding an object at which visual attention is directed appears with less distinction than the object at which the visual attention is directed.

According to one embodiment of the electronic device, the electronic device further includes the light-field camera assembly that captured the image data and a memory to store the image data.

These and further features will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

### BRIEF DESCRIPTION OF THE DRAWINGS

FIGs. 1 and 2 are respectively a front view and a rear view of an exemplary electronic device that includes a representative camera assembly;
FIG. 3 is a schematic block diagram of the electronic device of FIGs. 1 and 2 as part of a communications system in which the electronic device may operate;
FIG. 4 is a flow diagram of an exemplary technique for displaying a photo;
FIGs. 5A-5C are exemplary views of a photo that is taken with and displayed by the exemplary camera system;
Figs. 6A-6C are exemplary line drawing versions of a photo that is taken with and displayed by the exemplary camera system.

### DETAILED DESCRIPTION OF EMBODIMENTS

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments.

Described below in conjunction with the appended figures are various embodiments of camera systems and methods of displaying a photo. In the illustrated embodiments, the camera system is embodied as a digital camera assembly that is made part of a mobile telephone. It will be appreciated that the disclosed camera technology may be applied to other operational contexts such as, but not limited to, a dedicated camera or another type of electronic device that has a camera. Examples of these other devices include, but are not limited to a video camera, a digital photo viewer (sometimes referred to as a digital picture frame), a navigation device (commonly referred to as a "GPS" or "GPS device"), a personal digital assistant (PDA), a media player (e.g., an MP3 player), a gaming device, a "web" camera, a computer (including a laptop, an "ultra-mobile PC" or other type of computer), and an accessory for another electronic device. The camera assembly may be used to capture image data in the form of still images, also referred to as pictures, photos, and photographs, but it will be understood that the camera assembly may be capable of capturing video images in addition to still images. The camera operation and photo display techniques are described in the exemplary context of still photography, but it will be appreciated that the techniques may be used in connection with videography.

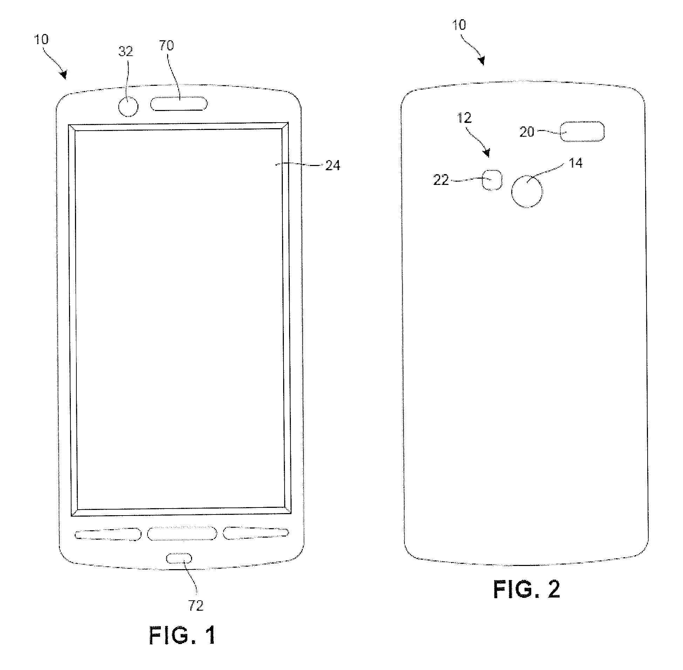

Referring initially to FIGs. 1 and 2, an electronic device 10 is shown. The illustrated electronic device 10 is a mobile telephone. The electronic device 10 includes a camera assembly 12 for taking digital still pictures and/or digital video clips. It is emphasized that the electronic device 10 need not be a mobile telephone, but could be a dedicated camera or some other device as indicated above.

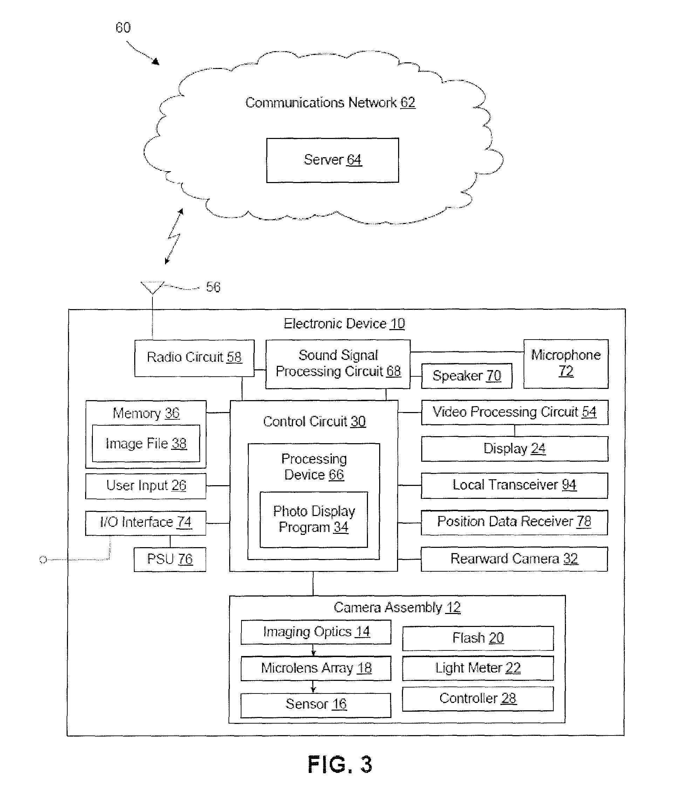

With additional reference to FIG. 3, the camera assembly 12 may be arranged as a light-field camera assembly. Light-field cameras are also referred to by the names plenoptic cameras and polydioptric cameras. The camera assembly includes imaging optics 14 to focus light from a scene within the field of view of the camera assembly 12. A sensor 16 is present to convert the light into image data. A microlens array 18 (also known as a lenticular lens array) is located between the optics 14 and the sensor 16. The microlens array 18 allows the sensor 16 to capture a "4D" light field by refocusing light onto the image sensor 16 so that the resulting image data contains many small images taken from slightly different viewpoints. As will be described, the image data may be manipulated to extract depth information and "refocus" the image as a whole after it has been taken and stored. The refocusing may include focusing the displayed image so that that the photo appears to a user to have an equivalent focal length that brings objects in one distance range away from the camera assembly when the photo was taken into focus in the displayed version of the photo. Therefore, the refocusing may be considered a change in the depth of field for the photo. Alternatively, the refocusing may include bringing the entire photo into focus when the photo is displayed.

The imaging optics 14 may include a lens assembly and any other components that supplement the lens assembly, such as a protective window, a filter, a prism, and/or a mirror. To adjust the focus of the camera assembly 12, a focusing assembly that includes focusing mechanics and/or focusing control electronics may be present in conjunction with the imaging optics 14. A zooming assembly also may be present to optically change the magnification of captured images.

Other camera assembly 12 components may include a distance meter (also referred to as a rangefinder), a supplemental illumination source (e.g., a flash 20), a light meter 22, a display 24 for functioning as an electronic viewfinder, an optical viewfinder (not shown), and any other components commonly associated with cameras.

A user input 26 may be present for accepting user inputs. The user input 26 may take one or more forms, such as a touch input associated with the display 24, a keypad, buttons, and so forth. One user input function may be a shutter key function that allows the user to command the taking of a photograph. In one embodiment, the display 24 has a relatively fast refresh rate. Most commercially available organic light emitting diode (OLED) displays have a satisfactory refresh rate for purposes of the disclosed techniques for displaying a photo.

Another component of the camera assembly 12 may be an electronic controller 28 that controls operation of the camera assembly 12. The controller may be embodied, for example, as a processor that executes logical instructions that are stored by an associated memory, as firmware, as an arrangement of dedicated circuit components, or as a combination of these embodiments. Thus, processes for operating the camera assembly 12 may be physically embodied as executable code (e.g., software) that is stored on a computer readable medium (e.g., a memory), or may be physically embodied as part of an electrical circuit. In another embodiment, the functions of the electronic controller 28 may be carried out by a control circuit 30 that is responsible for overall operation of the electronic device 10. In this case, the controller 28 may be omitted. In another embodiment, camera assembly 12 control functions may be distributed between the controller 28 and the control circuit 30.

The sensor 16 may capture data at a predetermined frame rate to generate a preview video signal that is displayed on the display 24 for operation as an electronic viewfinder to assist the user compose photographs.

In addition to the camera assembly 12, the electronic device 10 may include a rearward facing camera 32. The rearward facing camera 32 may be arranged so as to be directed toward and capable of capturing images or video of the user of the electronic device 10 when the user views the display 24. In one embodiment, the rearward camera 32 may be used in connection with video telephony to capture images or video of the user for transmission to a called or calling device.

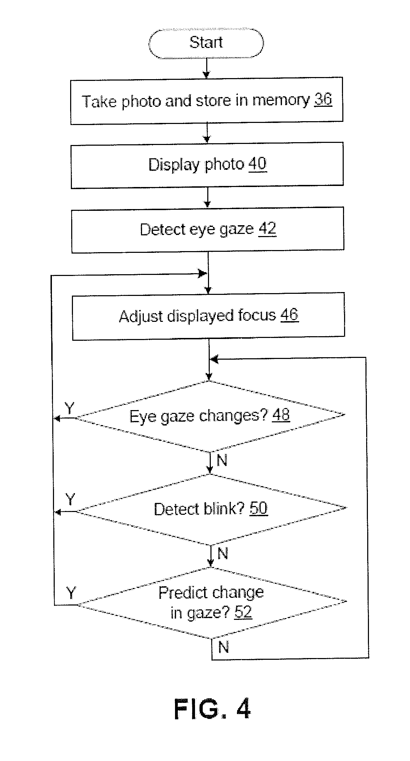

With additional reference to FIG. 4, illustrated is a flow diagram of an exemplary method of operating the camera assembly 12 and displaying photos that are taken with the camera assembly 12. In other embodiments, the displaying may occur with an electronic device that is different than the electronic device that takes the photos. While displaying a photo, the method includes using the rearward camera 32 to track eye movement, inclusive of eye gaze direction, to determine where on the display 24 the user has directed his or her visual attention. A corresponding location of the displayed photo at which the user is looking may be ascertained. Object identification may then be used to identify an object in the photo at which the used is looking. Then, the focus of the photo may be dynamically updated to match the gaze of the user. This is similar to the manner in which a person visually perceives the world around them. That is, when a user looks at an object in the foreground of a photo, the focus of the photo may be adjusted so that foreground objects are in focus. In this case, midground and background objects will likely appear blurry, with the midground objects appearing less blurry than the background objects. If the user move his or her eyes to a background object, the focus may be changed so that background objects appear to be in focus and the midground and foreground objects may appear to be blurry, with the midground objects appearing less blurry than the background objects. In order to conduct the focusing of the displayed photo, the focus distance for the object drawing the user's visual attention may be calculated from a source file of the photo that is generated by the light-field camera assembly 12.

In one embodiment, the dynamic focusing may be carried out in a manner that simulates human vision instead of placing all objects located at a similar distance to the object at which the user is looking into focus. In human vision, the fovea of the eyes is arranged so that peripheral vision is less distinct than central vision. To simulate this effect, the focusing of the photo may be carried out to "foveate" the image, such that the object at which the user is looking is in focus, objects at different distances (i.e., depth from the camera when the photo was taken) are appropriately out of focus, and objects radially displaced on the display 24 from the object at which the user is looking are appropriately out of focus even if those objects are at the same distance (i.e., depth from the camera) as the object at which the user is looking.

Variations to the illustrated method are possible and, therefore, the illustrated embodiment should not be considered the only manner of carrying out the techniques that are disclosed in this document. Also, while FIG. 4 shows a specific order of executing functional logic blocks, the order of executing the blocks may be changed relative to the order shown and/or may be implemented in an object-oriented manner or a state-oriented manner. In addition, two or more blocks shown in succession may be executed concurrently or with partial concurrence. Certain blocks also may be omitted. The exemplary method may be carried out by executing code stored by the electronic device 10, for example. The code may be embodied as a set of logical instructions that may be executed by a processor. Therefore, the method may be embodied as software in the form of a computer program that is stored on a computer readable medium, such as a memory. In the illustrated embodiment, the method is embodied as a photo display program 34 (FIG. 3). In view of this arrangement, the flow chart of FIG. 4 may be thought of as depicting steps of a method carried out by the electronic device 10.

The logical flow may begin in block 36 where a photo is taken with the camera assembly 12 and stored in a memory 36 as an image file 38. Next, in block 40, the photo may be displayed on the display 24.

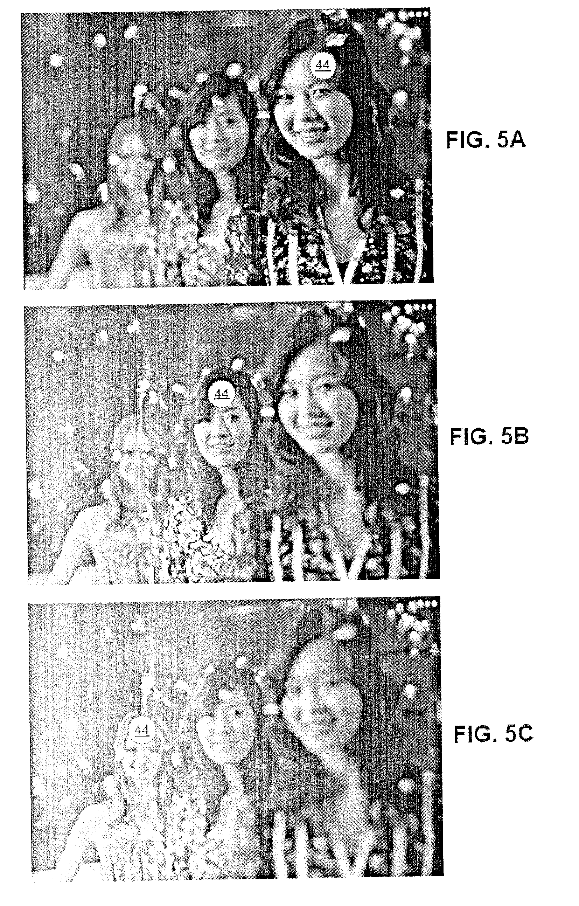

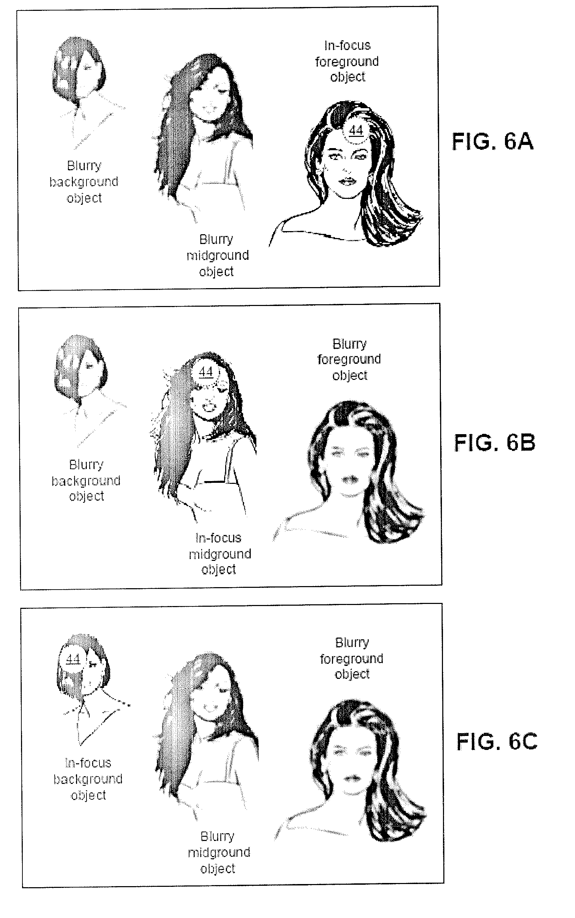

FIGs. 5A, 5B and 5C illustrate an exemplary photo displayed in accordance with the method. FIGs. 6A, 6B and 6C illustrate an exemplary line drawing representation of a photo displayed in accordance with the method. In each of these examples, three women are portrayed where one woman is in the foreground, another is in the midground and a third is in the background. Depending on eye gaze of the user, the focus of the displayed photo will be adjusted to correspond to an object present at the location in the photo at which the user is looking. It will be appreciated that the method may be applied to photos that do not include people as subjects or include a mix of people and other subjects. For instance, objects in the photo may include people, animals, buildings, landscapes, and so forth.

In block 42, the eye gaze of the user of the electronic device 10 may be detected. As indicated, eye gaze (or where on the display 24 the user's visual attention is directed) may be determined by analyzing images or video that is taken with the rearward camera 32. In FIGs. 5A-5C and 6A-6C, the eye gaze location is marked with a circle designated as eye gaze location 44. In FIGs. 5A and 6A, the user's eye gaze location 44 corresponds to the foreground object in the displayed photos. In FIGs. 5B and 6B, the user's eye gaze location 44 corresponds to the midground object in the displayed photos. In FIGs. 5C and 6C, the user's eye gaze location 44 corresponds to the background object in the displayed photos.

In block 46, the focus of the displayed photo may be adjusted to correspond to the eye gaze location 44 of the user. Therefore, as an example, if the user were looking at the foreground woman as illustrated in FIGs. 5A and 6A, then the focus may be adjusted so that the foreground woman is in focus, and the midground and background women may be adjusted to be less distinct (e.g., out of focus or blurry) as described in greater detail above and as would be the case if the user were actually viewing the scene represented in the photo. Similarly, if the user were looking at the midground woman as illustrated in FIGS. 5B and 6B, then the focus may be adjusted so that the midground woman is in focus, and the foreground and background women may be adjusted to be less distinct (e.g., out of focus or blurry). And, if the user were looking at the background woman as illustrated in FIGs. 5C and 6C, then the focus may be adjusted so that the background woman is in focus, and the foreground and midground women may be adjusted to be less distinct (e.g., out of focus or blurry).

In block 48, a determination may be made as to whether the user's eye gaze has changed. For instance, if the user first looks at the foreground woman as shown in FIG. 5A or FIG. 6A, and then looks at the midground or the background woman, then a positive determination may be made in block 48. Upon making a positive determination in block 48, the logical flow may return to block 46 where the focus of the displayed photo is adjusted to match the changed eye gaze of the user.

Other events may be used as triggers to make changes in focus of the displayed photo. For example, following a negative determination in block 48, the logical flow may proceed to block 50 where a determination is made as to whether the user has blinked. If the user blinks, a positive determination may be made and the logical flow may return to block 46 for focus adjustment. For instance, the entire photo may be made to be in focus so that when the user's eyes open, the photo may be seen clearly. Then, the eye gaze may be redetected and focus may be adjusted based on eye gaze.

As another example, following a negative determination in block 50, the logical flow may proceed to block 52 where a prediction is made as to where in the photo the user may look next. If a determination is made that the user is about to look at an object other than the object currently having the user's visual attention, then the logical flow may be return to block 46 where the focus may be adjusted to place the object corresponding to the predicted location into focus. If a determination is not made about a predicted change in eye gaze location, the logical flow may return to block 48 to continue to check for changes in eye gaze.

As indicated, the illustrated electronic device 10 shown in FIGs. 1 and 2 is a mobile telephone. Additional features of the electronic device 10, when implemented as a mobile telephone, will be described with additional reference to FIG. 3. The display 24 displays graphical user interfaces, information and content (e.g., images, video and other graphics) to a user to enable the user to utilize the various features of the electronic device 10. The display 24 may be coupled to the control circuit 30 by a video processing circuit 54 that converts video data to a video signal used to drive the display 24. The video processing circuit 54 may include any appropriate buffers, decoders, video data processors and so forth.

The electronic device 10 includes communications circuitry that enables the electronic device 10 to establish communication with another device. Communications may include voice calls, video calls, data transfers, and the like. Communications may occur over a cellular circuit-switched network or over a packet-switched network (e.g., a network compatible with IEEE 802.11, which is commonly referred to as WiFi, or a network compatible with IEEE 802.16, which is commonly referred to as WiMAX). Data transfers may include, but are not limited to, receiving streaming content, receiving data feeds, downloading and/or uploading data (including Internet content), receiving or sending messages (e.g., text messages, instant messages, electronic mail messages, multimedia messages), and so forth. This data may be processed by the electronic device 10, including storing the data in the memory 36, executing applications to allow user interaction with the data, displaying video and/or image content associated with the data, outputting audio sounds associated with the data, and so forth.

In the exemplary embodiment, the communications circuitry may include an antenna 56 coupled to a radio circuit 58. The radio circuit 58 includes a radio frequency transmitter and receiver for transmitting and receiving signals via the antenna 56. The radio circuit 58 may be configured to operate in a mobile communications system 60. Radio circuit 58 types for interaction with a mobile radio network and/or broadcasting network include, but are not limited to, global system for mobile communications (GSM), code division multiple access (CDMA), wideband CDMA (WCDMA), general packet radio service (GPRS), WiFi, WiMAX, integrated services digital broadcasting (ISDB), high speed packet access (HSPA), etc., as well as advanced versions of these standards or any other appropriate standard. It will be appreciated that the electronic device 10 may be capable of communicating using more than one standard. Therefore, the antenna 56 and the radio circuit 58 may represent one or more than one radio transceiver.

The system 60 may include a communications network 62 having a server 64 (or servers) for managing calls placed by and destined to the electronic device 10, transmitting data to and receiving data from the electronic device 10, and carrying out any other support functions. The server 64 communicates with the electronic device 10 via a transmission medium. The transmission medium may be any appropriate device or assembly, including, for example, a communications base station (e.g., a cellular service tower, or "cell" tower), a wireless access point, a satellite, etc. The network 62 may support the communications activity of multiple electronic devices 10 and other types of end user devices. As will be appreciated, the server 64 may be configured as a typical computer system used to carry out server functions and may include a processor configured to execute software containing logical instructions that embody the functions of the server 64 and a memory to store such software. In alternative arrangements, the electronic device 10 may wirelessly communicate directly with another electronic device 10 (e.g., another mobile telephone or a computer) and without an intervening network.

As indicated, the electronic device 10 may include the primary control circuit 30 that is configured to carry out overall control of the functions and operations of the electronic device 10. The control circuit 30 may include a processing device 66, such as a central processing unit (CPU), microcontroller or microprocessor. The processing device 66 executes code stored in a memory (not shown) within the control circuit 30 and/or in a separate memory, such as the memory 36, in order to carry out operation of the electronic device 10. The memory 36 may be, for example, one or more of a buffer, a flash memory, a hard drive, a removable media, a volatile memory, a non-volatile memory, a random access memory (RAM), or other suitable device. In a typical arrangement, the memory 36 may include a non-volatile memory for long term data storage and a volatile memory that functions as system memory for the control circuit 30. The memory 36 may exchange data with the control circuit 30 over a data bus. Accompanying control lines and an address bus between the memory 36 and the control circuit 30 also may be present.

The electronic device 10 further includes a sound signal processing circuit 68 for processing audio signals transmitted by and received from the radio circuit 58. Coupled to the sound processing circuit 68 are a speaker 70 and a microphone 72 that enable a user to listen and speak via the electronic device 10, and hear sounds generated in connection with other functions of the device 10. The sound processing circuit 68 may include any appropriate buffers, encoders, decoders, amplifiers and so forth.

The electronic device 10 may further include one or more input/output (I/O) interface(s) 74. The I/O interface(s) 74 may be in the form of typical mobile telephone I/O interfaces and may include one or more electrical connectors for operatively connecting the electronic device 10 to another device (e.g., a computer) or an accessory (e.g., a personal handsfree (PHF) device) via a cable. Further, operating power may be received over the I/O interface(s) 74 and power to charge a battery of a power supply unit (PSU) 76 within the electronic device 10 may be received over the I/O interface(s) 74. The PSU 76 may supply power to operate the electronic device 10 in the absence of an external power source.

The electronic device 10 also may include various other components. A position data receiver 78. such as a global positioning system (GPS) receiver, may be involved in determining the location of the electronic device 10. A local wireless transceiver 80, such as a Bluetooth chipset, may be used to establish communication with a nearby device, such as an accessory (e.g., a PHF device), another mobile radio terminal, a computer or another device.

The foregoing description was made in the exemplary context of taking and displaying a photo with an electronic device in the form of a mobile telephone. As mentioned above, it will be appreciated that the disclosed techniques may be applied to the display of photos using other types of devices and other manners of obtaining a photo. For instance, the technique may be applied, in real time, to the preview video image displayed on an electronic viewfinder during composition of a photo. The disclosed techniques also may be applied to 2D or 3D video, or to 3D photos. In addition, the technique may be combined with the introduction of content into the photo or video, such as the addition of an augmented reality object added to a scene to have the appearance of presence in three dimensional space, or the addition of static or dynamic user interface elements.

The technique may be applied to photos that are taken with a light-field camera and then transferred to the electronic device for viewing. For instance, photos may be emailed to the electronic device, loaded from a separate memory, downloaded from a database of photos that are stored on a network server, or obtained in any other suitable manner.

The rearward camera 32 is one example of a eye movement and gaze tracking sensor assembly. Other example sensor assemblies include a head-mounted eye tracker and a device that tracks orientation and position of the user's face relative to the display.

In still other embodiments, the display technique may be applied to images presented to multiple users, such as on a display from which different images may be seen depending on viewing angle or user position relative to the display, or on a 3D display that is viewed with 3D glasses (e.g., glasses with polarized lenses or shutter glasses).

The display techniques may be adapted to an individual user. For instance, the display techniques may compensate for nearsightedness, farsightedness, stigmatism, or visual impairment. Another adaptation for the individual user may be an adjustment for the size and placement of the user's sharp vision due to the size and location of the fovea. The fovea sees approximately the central two degrees of the visual field. This is roughly twice the width of the user's thumbnail at arm's length. Also, the foveal pit is temporally displaced from the optical axis by about four to about eight degrees.

Although certain embodiments have been shown and described, it is understood that equivalents and modifications falling within the scope of the appended claims will occur to others who are skilled in the art upon the reading and understanding of this specification.

## Claims

1. A method of displaying a digital photo, comprising:
displaying image data from an image file (38) on a display (24), the image data captured with a light-field camera assembly (12) and representing a scene having a plurality of objects at different focus depths;
detecting eye gaze of a user and indentifying one of the objects at which the user is looking; and
focusing the displayed image data by bringing the displayed image data for the identified object into focus.

2. The method of claim 1, further comprising detecting a change in the eye gaze of the user to a different object and refocusing the displayed image data to bring the different object into focus.

3. The method of any one of claims 1-2, wherein the focusing includes displaying objects having focus depths that are different than the focus depth of the identified object to be out of focus.

4. The method of any one of claims 1-3, wherein the focusing includes bringing additional objects at the focus depth of the identified object into focus.

5. The method of any one of claims 1-4, wherein the focusing includes displaying portions of the displayed image data radially surrounding the identified object to be out of focus to simulate human vision where objects surrounding an object at which visual attention is directed appears with less distinction than the object at which the visual attention is directed.

6. An electronic device (10) that displays a digital photo, comprising:
a display (24) configured to display image data from an image file (38), the image data captured with a light-field camera assembly (12) and representing a scene having a plurality of objects at different focus depths;
a camera (32) arranged to capture images of a user while the user views the displayed image data; and
a control circuit (28, 30) configured to:
detect eye gaze of a user and indentify one of the objects at which the user is looking; and
control the display of the image data to focus the displayed image data to bring the displayed image data for the identified object into focus.

7. The electronic device of claim 6, wherein the control circuit is further configured to detect a change in the eye gaze of the user to a different object and refocus the displayed image data to bring the different object into focus.

8. The electronic device of any one of claims 6-7, wherein the display of the image data is controlled to display objects having focus depths that are different than the focus depth of the identified object to be out of focus.

9. The electronic device of any one of claims 6-8, wherein the display of the image data is controlled to display additional objects at the focus depth of the identified object to be in focus.

10. The electronic device of any one of claims 6-9, wherein the display of the image data is controlled to display portions of the displayed image data radially surrounding the identified object to be out of focus to simulate human vision where objects surrounding an object at which visual attention is directed appears with less distinction than the object at which the visual attention is directed.

11. The electronic device of any one of claims 6-10, further comprising the light-field camera assembly that captured the image data and a memory (36) to store the image data.
